# EUROPÄISCHE PATENTSCHRIFT

(11) **EP 1 644 785 B1**
(45) Veröffentlichungstag und Bekanntmachung des Hinweises auf die Patenterteilung: **27.02.2008**
(21) Anmeldenummer: 04738703.0
(22) Anmeldetag: 17.06.2004
(51) Int. Cl.: G06F 21/24, G06F 17/30

(54) **VERFAHREN FÜR EIN NETZBASIERTES DATENSPREICHERSYSTEM MIT HOHER SICHERHEIT**
METHOD FOR USE IN A NETWORK BASED SAFETY DATA STORAGE SYSTEM
PROCEDE DESTINE A UN SYSTEME POUR MEMORISER DES DONNEES DANS DES RESEAUX AVEC UN NIVEAU DE SECURITE ELEVE

(30) Priorität: 01.07.2003 DE 10329779
(43) Veröffentlichungstag der Anmeldung: 12.04.2006
(73) Patentinhaber: Deutsche Telekom AG, 53113 Bonn (DE)
(72) Erfinder: KÖPPEN, Siegried, 15711 Königs-Wusterhausen (DE); LÖWE, Stefan, 10589 Berlin (DE)
(74) Vertreter: Drosch, Ulrich
(86) Internationale Anmeldenummer: PCT/DE2004/001252
(87) Internationale Veröffentlichungsnummer: WO 2005/003933

(56) Entgegenhaltungen:
- WO-A-00/51034

## Beschreibung

Die Erfindung betrifft das Gebiet der Sicherheit für den Zugriff und die Datenspeicherung auf Servern, die in Netzwerken mit freiem Zugang arbeiten.

### Angaben zum Stand der Technik

Für die Sicherheit und Bereitstellung von Dateien über z.B. das Internet gibt es eine Reihe von Anwendungen, deren spezifische Merkmale im folgenden dargestellt werden.

Bei der Applikation Cryptoheaven (siehe http://www.crytoheaven.com) handelt es sich um eine Java Applikation (Applet/Java Plugin). Die Anzeige erfolgt wie beim MS-Explorer, links geteilt in Verzeichnisbaum (incl. lokaler Rechner) und Kontaktliste. Einstellungen sind über die rechte Maustaste/Popup möglich. Es wird ein proprietäres Protokoll über den Port 82 verwendet. Eingesetz wird Datenkompression. Dateien werden signiert und verschlüsselt. Ein Upload der Dateien ist auch mit Drag and Drop (DnD) aus dem lokalen Filesystem möglich. Die Ablaufsteuerung entspricht weitgehend der von MS-Explorer. Die Verschlüsselung erfolgt lokal auf dem Clientrechner. Es können Verzeichnisse angelegt, gelöscht und umbenannt werden. Die Freigabe von Verzeichnissen erfolgt an "eingeladene Nutzer". Die Einladung über e-mail erfolgt durch Teilnehmer, die das System abboniert haben. Der Eingeladene muss zustimmen. Die Authentifizierung erfolgt mittels User-ID und Passwort. Das System gibt es für die Betriebssysteme Windows/Unix und Linux.

Eine andere typische Anwendung gibt es bei bvPREMIERE, bvPRO, bvPLUS+ und big VAULT Enterprise (siehe http://www.bigvault.com). Die Anwendungen sind speziell für Windows und ermöglichen die Einbindung (Anlegen) eines Laufwerks in den MS-Explorer, der über das WEB bedient wird. Das Übertragungsprotokoll für Dateiupload und Dateidownload ist html über eine SSI-Verbindung. Die Verschlüsselung der Dateien erfolgt auf dem Server. Die Freigabe von Verzeichnissen und Dateien erfolgt mit einem Besucherpasswort. Es gibt einen Eingangskorb für autorisierte Nutzer. Ein Login ist als Nutzer oder Besucher möglich. Das Einrichten von Passwörtern mit beschränkter Gültigkeitsdauer erfolgt in der Art, wie es beispielsweise bei UNIX seit vielen Jahren angewendet wird.

Eine weitere Anwendung, die einen online Datei-Service für Upload/Download bietet, ist GLOBEDESK (siehe http://www.globedesk.com). Für Upload/Download über den Browser wird html oder ftp verwendet. Die Verbindung wird über SSL gesichert. Die Verschlüsselung erfolgt auf dem Server. Die Namen der Abonnenten sind in einem Verzeichnis aufgelistet. Ein Klick auf einen Namen verbindet mit den bereitgestellten Verzeichnissen. Die Identifizierung der Nutzer erfolgt über e-mail und Namen.

Die angegebenen Beispiele sind durch folgende Merkmale charakterisiert:
- Die Sicherheit beruht auf einem Modell mit Nutzernamen und Passwort. Sobald sich ein Nutzer durch seinen Namen und das dazu gehörende Passwort authentifiziert hat, steht ihm das System in immer gleicher Weise zur Verfügung.
- Die Speicherung der Daten erfolgt in einem Dateisystem bzw. derart, das für den Nutzer die Funktionalität eines Dateisystems exakt nachgebildet wird (z.B. PostfÄcher bei Webmail), wie es in WO-A-00/51034 beschrieben wird.

Die bekannten Anwendungen haben hinsichtlich Sicherheit und Speichersystem folgende Nachteile:
- Ein auf Nutzernamen und Passwort beruhendes Sicherheitsmodell kann für die Zugriffserlaubnis lediglich die Zustände erteilt oder entzogen umsetzen. Eine feinere Einstellung, zum Beispiel durch Zeitbegrenzung oder einzuhaltende Zeitabstände für den Zugriff, ist nicht möglich.
- Das verwendete Speichemodell ist charakterisiert als Registratur der angelegten Ordner, in die die Dateien ohne Berücksichtigung ihrer Typen abgelegt und wieder entnommen werden. Eine frei gewählte Zuordnung bzw. Einschränkung nach vorgegebenen Dateitypen ist nicht möglich.

Die Erfindung stellt sich die Aufgabe, für den Zugang und die Datenspeicherung bei Servern in Telekommunikationsnetzen ein Verfahren anzubieten, das die Nachteile der bekannten Anwendungen überwindet und eine wesentlich höhere Sicherheit gewährleistet.

Das Verfahren gemäß der Erfindung wird im Haupanspruch 1 definiert.

Das Verfahren ist dadurch charakterisiert, das für die Zugangsrechte Abhängigkeiten wie Aufenthaltsort, Zugangszeit, Endgerätemerkmale, Qualität der Verbindungswege, Authentifizierungsmethode etc. berücksichtigt werden können und für die Datenspeicherung eine Sicherheitskonfiguration nachgebildet werden kann, die dem Schließfachprinzip entspricht. Die Sicherheit wird des Weiteren dadurch erhöht, dass die Ver- und Entschlüsselung der Dateien auf dem lokalen Rechner des Nutzers erfolgt und auf dem Server noch ein zweiter Verschlüsselungsalgorithmus angewendet wird, den der Nutzer nicht beeinflussen kann.

Der Datentransfer hat das Ziel, Daten in Speichern von Servern abzulegen, um sie zu gegebener Zeit wieder auf den lokalen Rechner zurückzuholen, sie auf einen entfernten Rechner bearbeiten zu lassen, oder sie Dritten - oder dem Nutzer selbst - an einem anderen Ort für einen bestimmten Zeitraum bereitzustellen. Die Bedingungen, unter denen ein Zugriff möglich ist, müssen sich präzise einstellen und verwalten lassen. Für die Ablage der Dateien ist ein Ordnungssystem erforderlich, das eine überschaubare Übersichtlichkeit für das Auffinden der Dateien bieten sollte und die Datensicherheit optimal unterstützt.

Die Forderungen nach einer präzisen Zugriffskontrolle und einem Ordnungssystem für die Ablage der Dateien mit hoher Sicherheit werden optimal erfüllt durch das erfindungsgemäße Datenspeichersystem.. Das Datenspeichesystem umfasst den in einem Telekommunikationsnetz arbeitenden Server mit seinem speziellen Programm sowie die über das Netz einbezogenen lokalen Rechner. Das Programm auf dem Server verwendet als Speichermodell ein Schließfachsystem.. Das Schließfachsystem hat virtuellen Charakter, weil in Abhängigkeit von den Zugriffsrechten dem Nutzer nur die Schließfächer und Dateien angezeigt werden, für die der Nutzer die Zugriffsberechtigung hat. Für den Nutzer gibt es keine Information, wenn der Zugriff verweigert wird, sondern die Schließfächer, Unterschließfächer und Dateien, für die der Nutzer keine Berechtigung hat, werden dem Nutzer nicht angezeigt.

Für den Zugang zu dem Server und die Nutzung der Programme ist eine Erlaubnis notwendig, die von dem Betreiber des Servers erteilt wird. Ein Antrag dafür ist etwa auf schriftliche Anforderung oder über das Internet erhältlich. Der Antrag muss alle Informationen enthalten, die für die Ausstellung eines Nutzerzertifikats notwendig sind. Das Zertifikat enthält unter anderem den öffentlichen Schlüssel des Nutzers. Zu diesem öffentlichen Schlüssel besitzt der Nutzer einen geheimen Schlüssel. Vorzugsweise sind geheimer Schlüssel und Zertifikat auf einer Chipkarte gespeichert, da so ein starker Schutz des geheimen Schlüssels erreicht wird. Wird diese Möglichkeit gewählt, erhält der Nutzer, um gegebenenfalls das System ohne Chipkarte nutzen zu können, ein zweites Schlüsselpaar, bei dem der geheime Schlüssel mit einem vom Nutzer gewählten Paßwort geschützt ist.

Zur Identifikation des Nutzers werden persönliche Daten zusammen mit einer Kopie des Zertifikats in eine Datenbank eingetragen. Der Server greift auf diese Informationen zu, um Nutzer authentifizieren zu können, und um ein für alle Nutzer erreichbares Nutzerverzeichnis anzubieten. Insbesondere besitzt jeder Nutzer einen eindeutigen Systemnamen, der sich von seinem natürlichen Namen unterscheiden kann.

Bei der Anmeldung richtet der Betreiber des Servers dem Nutzer einen persönlichen Bereich des Servers ein, der Hauptordner des Nutzers genannt wird.
Betriebssysteme und Datenbanken speichern Daten und ihre Vewaltungsinformationen auf unterschiedlichste Weise. Hier wird zur Beschreibung das bekannte Modell der Ordner (auch: Verzeichnisse) und Dateien vewendet. Eine Datei (enthält die Daten) ist stets in einem Ordner enthalten, der entweder der sogenannte Wurzelordner ist oder selbst in einem Ordner enthalten ist. Von diesem Ordner ausgehend gelangt man so über eine Kette von Oberordnern zu dem Wurzelordner. Die Namen der Ordner in dieser Kette werden zu dem sogenannten Pfad der Datei aneinandergehängt. Eine Datei wird eindeutig durch ihren Namen und ihren Pfad beschrieben.
In dem hier beschriebenen Datenspeichersystem enthält jeder Ordner eine spezielle Datei, die Sicherheitsinformationen und Verwaltungsangaben (Tabelle 1).

Unter einem Schließfach wird im Folgenden die Einheit von Ordner und der speziellen Datei verstanden.

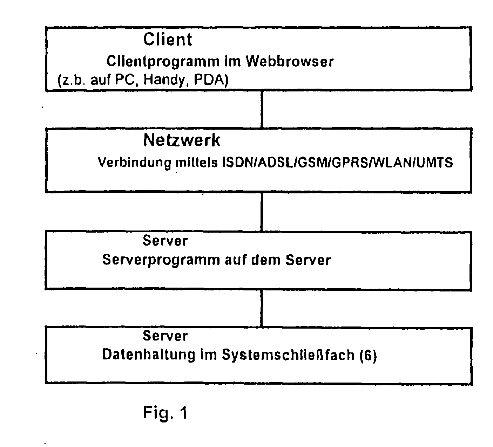

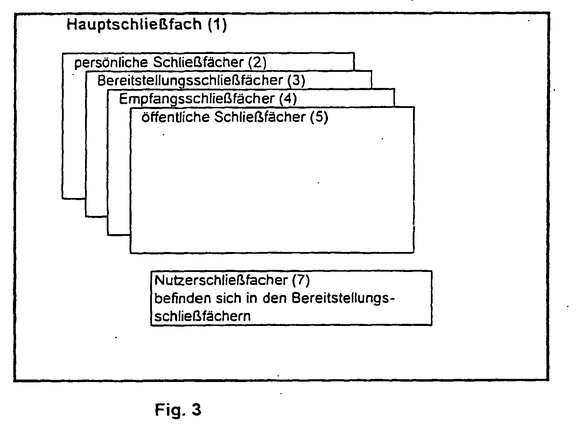

Fig. 3 zeigt eine Übersicht zum Schließfachsystem. In dem Hauptschließfach (1) befinden sich von dem Betreiber eingerichtetete, nach Funktionen unterschiedene weitere Schließfächer, unter anderem persönliche Schließfächer (2), Bereitstellungsschließfächer (3), Empfangsschließfächer (4) und öffentliche Schließfächer (5) für die Nutzer. Die Angabe der Schließfachart erfolgt in der zugehörigen speziellen Datei.
Ein Verweis auf eine Datei enthält mindestens den Namen derjenigen Datei, auf die sie verweist.
In persönlichen Schließfächern speichert der Nutzer nur Verweise auf seine Dateien, die übertragenen Dateien selbst speichert der Server in dem Systemschließfach (6), zu dem nur der Server Zugang hat (Fig. 1). In Bereitstellungsschließfächem speichert der Nutzer Verweise auf seine Dateien für andere Nutzer, in Empfangsschließfächem befinden sich ihm von anderem Nutzern angebotene Verweise, und in öffentlichen Schließfächern befinden sich Verweise auf Dateien, die allen Nutzern angeboten werden. In jedem Schließfach eines oben genannten Typs kann der Nutzer Unterschließfächer einrichten, in denen er Verweise speichern kann, und die wieder andere Unterschließfächer enthalten können.

Der Zugang zu dem Server erfolgt vom lokalen Rechner aus durch Anwahl der Internetadresse des Servers. Dadurch erhält der Server die Internetadresse des lokalen Rechners. In der Regel identifiziert der Netzwerkbetreiber, der den Zugang des lokalen Rechners an das Internet vermittelt, die Zugangstelle (ISDN oder ADSL Verbindung, GSM, GPRS, WLAN, UMTS) eindeutig. Damit der Server diese Information erhält, muss unter Umständen ein Vertrag zwischen Netzwerkbetreiber und Betreiber des Datensicherungssystems bestehen, und der Netzwerkbetreiber muss die technischen Möglichkeiten bereitstellen.

Die Struktur des Serverprogramms ist in Fig. 1 dargestellt. Der Server schickt ein spezielles Programm auf den lokalen Rechner, das sogenannte Clientprogramm. Es ist auch möglich, ein Clientprogamm auf dem lokalen Rechner zu installieren und aus ihm heraus die Anwahl durchzuführen. Das Clientprogamm verbindet sich mit einigen auf dem lokalen Rechner vorhandenen Systemen, zum Beispiel einem Chipkartenleser, einem Fingerabdruckscanner, einem Gesichtserkennungssystem, einem GPS Modul oder einem zur Bestimmung (oder näherungsweisen Bestimmung) des geographischen Orts eingerichteten Systems.
Mit Hilfe des Clientprogramms kann der Nutzer die ihm auf Serverseite zur Verfügung gestellten Funktionen nutzen und die zur Ausführung der Programme notwendigen Daten eingeben, sofern er sich ihm gegenüber erfolgreich authentifizieren kann. Zur Authentifizierung bietet das Clientprogramm nach Art der vorhandenen Komponenten (Kartenleser, biometrisches System) dem Nutzer verschiedene Möglichkeiten (Name/Paßwort, PIN, Chipkarte, Chipkarte mit Biometrie) an. Die ausgewählte Methode, Ergebnis der Authentifizierung, und die geographischen Daten (sofern vorhanden) werden an den Server weitergeleitet. Schlägt die Authentifizierung fehl, trennt der Server die Verbindung, und das Clientprogramm beendet sich. Bei Erfolg kann der Nutzer wählen, ob er als normaler Nutzer (Standardzustand) oder als Administrator agieren möchte. Im zweiten Fall kann das Clientprogramm eine erneute, qualitativ hochwertige Authentifizierung wie etwa mit Chipkarte und Biometrie verlangen.

Der Zeitraum von Authentifizierung bis beenden des Clientprogramms wird Sitzung genannt. Eine erfolgreiche Authentifizierung bewirkt insbesondere, dass mit der Sitzung der Systemname des Nutzers verbunden wird. Dadurch können viele parallel ablaufende Sitzungen separiert werden, und Server und Clientprogramm können die Rechte eines Nutzers zum Ausführen von Anwendungen kontrollieren. Die vom Clientprogamm übermittelten Informationen wie Art der Authentifizierung (Name/PW, Chipkarte, ...) und geographischer Ort sowie die dem Server bekannte Anfangszeit, die aktuelle Zeit und die Adresse (Internetadresse oder Netzwerkbetreiberidentifikation) des lokalen Rechners gehören ebenfalls zu den Sitzungsdaten und werden von dem Server gespeichert.

Das Clientprogramm zeigt dem Nutzer den Inhalt seines Hauptschließfachs und seines lokalen Dateisystems in der von dem Microsoft Explorer bekannten Form als Ordnerbaum an; auch die Handhabung lehnt sich an den Explorer an. Es werden jeweils nur die Schließfächer und Verweise angezeigt, für die der Nutzer in der aktuellen Sitzung die Berechtigung besitzt. Die Berechtigung stellt der Server fest, indem er die in der speziellen Datei enthaltenen Daten mit den Sitzungsdaten vergleicht.

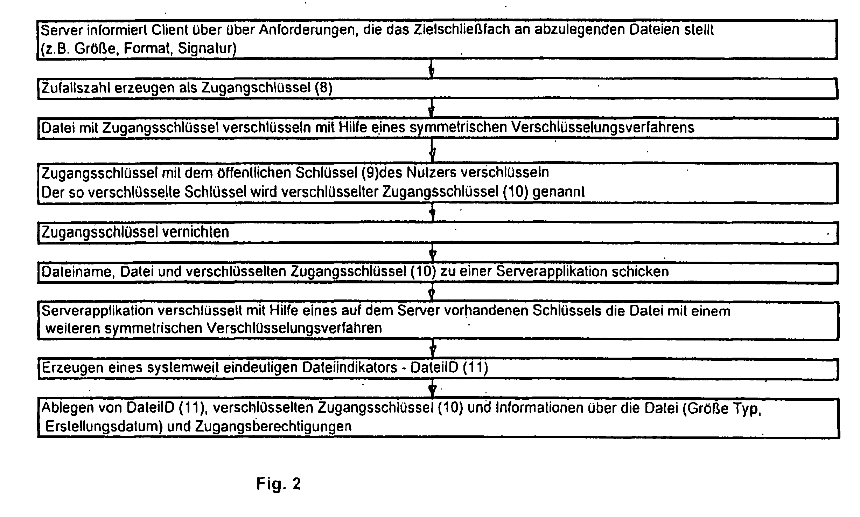

Die Schließfächer werden durch ein eigenes graphisches Symbol dargestellt, um sie von gewöhnlichen Ordnern zu unterscheiden. Besitzt der Nutzer Administratorrechte, erhalten die Schließfachsymbole eine besondere Farbe.
Die spezielle Datei eines Schließfachs ist nie sichtbar und kann auch nicht sichtbar gemacht werden. Ist der Nutzer Administrator, so zeigt ihm das Clientprogramm auf Anforderung den (vom Nutzer) änderbaren Inhalt der speziellen Datei an und ermöglicht ihm, Einträge zu ändern.
Das Systemschließfach ist nie sichtbar. Diese Eigenschaft kann auch nicht geändert werden, da der Nutzer keinen direkten oder indirekten Zugang zu der speziellen Datei des Systemschließfachs hat.
Das Ablegen einer auf dem lokalen Rechner befindlichen Datei in dem persönlichen Schließfach des Nutzers ist ein mehrstufiger Vorgang, der von ihm mit Hilfe eines Programms durchgeführt wird, das eine Komponente in dem Clientprogramm und eine Komponente auf dem Server besitzt. Die Benutzeroberfläche des Clientprogramms ermöglicht dem Nutzer, die abzulegende Datei durch Pfad und Namen auszuwählen und den Zielpfad in seinem persönlichen Schließfach anzugeben. Der Server informiert das Clientprogramm über Anforderungen, die das Zielschließfach an abzulegende Dateien stellt. Dazu gehören maximale Größe, bestimmtes Format (z.B. doc, pdf) oder Vorliegen einer Signatur der Daten. Sind die Anforderungen erfüllt, lädt das Clientprogramm die in der Datei enthaltenen Daten und erzeugt eine Zufallszahl, den so genannten Zugangsschlüssel (8), mit dem die Daten mit einem symmetrischen Verschlüsselungsverfahren verschlüsselt werden. Anschließend wird dieser Zugangsschlüssel mit dem öffentlichen Nutzerschlüssel zu dem verschlüsselten Zugangsschlüssel (9) verschlüsselt und der Zugangsschlüssel wird vernichtet. Dadurch wird erreicht, dass nur der Nutzer, der mit Hilfe seines geheimen Schlüssels den Zugangsschlüssel zurückgewinnen kann, den verschlüsselten Inhalt der Datei wieder entschlüsseln kann. Die Verschlüsselungsschritte für abzulegende Dateien sind in Fig. 2 dargestellt.
Dateiname, Dateityp, Dateigröße, verschlüsselte Daten und verschlüsselter Zugangsschlüssel werden zusmmen mit weiteren, nach Tabelle 2 benötigten Daten, an den serverseitigen Programmteil geschickt. Dieser verschlüsselt die Daten ein zweites Mal mit einem eigenen symmetrischen Schlüssel, so dass selbst ein Diebstahl der Daten, des verschlüsselten Zugangsschlüssels und des geheimen Nutzerschlüssels keinen Zugang zu den Daten ermöglicht. Dann erzeugt er einen systemweit eindeutigen Dateiidentifikator, der als interner Name der verschlüsselten Daten verwendet wird. Unter diesem Namen werden die verschlüsselten Daten im Systemschließfach abgelegt. Im Zielordner wird dann ein Verweis mit dem Namen der Datei als Dateinamen erzeugt, der den Dateiidentifikator, den verschlüsselten Zugangsschlüssel und Informationen über die Datei (Größe, Typ) enthält.
Will der Nutzer als Eigentümer einer Datei diese einem anderen Nutzer anbieten, richtet er als Administrator, so wie in Fig. 3 dargestellt, in einem Bereitstellungsschließfach ein Nutzerschließfach (7) für ihn ein. Der Server stellt ihm dafür über das Clientprogramm in der Art eines Telefonbuchs ein Nutzerverzeichnis zur Verfügung, aus dem er den gewünschten Nutzer als Adressat auswählt. Er kann auch einer Gruppe von Nutzern ein persönliches Schließfach einrichten. Der Server trägt diesen oder diese Nutzer als Miteigentümer des Schließfachs in die Eigenschaftendatei ein.
Mit Hilfe der Benutzeroberfläche des Clientprogramms teilt der Eigentümer dem Server die anzubietende Datei und ihr Ziel (ein vom Eigentümer eingerichtetes Unterschließfach) innerhalb des Nutzerschließfachs mit. Das Clientprogramm schickt diese Informationen an den Server. Der Server prüft, ob die Eigenschaften des Zielschließfachs die gewünschte Operation erlauben, und schickt dann eine Kopie des Verweises auf die Datei zusammen mit dem öffentlichen Schlüssel des Adressaten an das Clientprogramm zurück Dieser entnimmt aus dem Verweis den verschlüsselten Zugangsschlüssel, fordert den Nutzer auf, mit seinem geheimen Schlüssel den Zugangsschlüssel wieder herzustellen und verschlüsselt ihn dann mit dem öffentlichen Schlüssel des Adressaten zu einem neuen verschlüsselten Zugangsschlüssel. Der Zugangsschlüssel wird vernichtet, der neue verschlüsselten Zugangsschlüssel in den Verweis eingetragen, und der Verweis an den Server zurückgeschickt, der ihn in dem Zielschließfach ablegt. Dann wird in einem Empfangsschließfach des Adressaten ein Schließfach mit dem Namen des Eigentümers erzeugt.
Dadurch hat nun der Adressat einen Verweis auf die Datei zusammen mit einem persönlichen Zugangsschlüssel verschlüsselten Zugangsschlüssel.
Öffnet der Nutzer ein Empfangsschließfach, sieht er Schließfächer, die mit den Namen von Anbietern bezeichnet sind. Öffnet er ein solches Schließfach X (durch Klick auf das Icon in der Anzeige seines Clientprogramms) eines Anbieters, so durchsucht der Server die Bereitstellungsschließfächer des Anbieters nach Nutzerschließfächern, die von ihm für den Nutzer eingerichtet wurden, und wählt darunter die Nutzerschließfächer aus, die unter den aktuellen Sitzungsdaten dem Nutzer den Zugang gestatten. Diese Namen sendet der Server an das Clientprogramm, das sie als Unterschließfächer von X anzeigt. Die Nutzerschließfächer sind also nicht wirklich in X enthalten, der Nutzer kann das aber nicht feststellen.
Die angebotenen Verweise (der Nutzer sieht angebotene Dateien) werden vom Server nur dann an das Clientprogramm gemeldet, wenn kein Sitzungsdatum die in dem Verweis verzeichneten Bedingungen verletzt.
Aus der Beschreibung wird deutlich, dass ein Nutzer einen Verweis höchstens dann in seinem Clientprogramm sieht, wenn der Verweis einen mit dem öffentlichen Schlüssel des Nutzers verschlüsselten Zugangsschlüssel enthält. Der Nutzer kann mit seinem geheimen Schlüssel und dem verschlüsselten Zugangsschlüssel den Zugangsschlüssel der Datei wiederherstellen und die verschlüsselten Daten entschlüsseln.

**Tabelle 1: Spezielle Ordnerdatei**

| **Dateiangaben:** | Eigentümer | Dateinamen | Erstellungsdatum | Dateityp/Pfad | Signatur |
|---|---|---|---|---|---|
| | | | | | |
| **Zugangsdaten:** | | | | | |
| Recht "Zugang" Mitbenutzer 1 | Ort a | Zeit a | Authentifizierung a | IP-Adresse a | Netztyp a |
| | ... | ... | ... | ... | ... |
| | Ort z | Zeit z | Authentifizierung z | IP-Adresse z | Netztyp z |
| Recht "Zugang" Mitbenutzer n | " | " | " | " | " |
| | | | | | |
| **Obere Schranken:** | Dateigröße einzeln | Dateigröße Summe | Anzahl Unterschließfächer | | |
| **Einschränkungen:** | Dateitypen | Signaturen | | | |

**Tabelle 2: Verweis**

| | | |
|---|---|---|
| Definition: | Vom System angelegte Datei; | |
| | Repräsentant einer Datei im Systemschließfach | |
| Datenfelder: | Identifikator der verwiesenen Datei; | |
| | Verschlüsselter | |
| | Verschlüsselungsschlüssel; | |
| | Typ der Datei; | |
| | Größe der Datei; | |
| | Zeit der Dateierzeugung; | |
| | Zeit der Anlage des Verweises; | |
| | Zeit des letzten Zugriffs. | |
| Sicherheitsinformationen: | Eigentümer; | |
| | Restriktion Authentifizierung | |
| | | |

## Patentansprüche

1. Verfahren für ein netzbasiertes Datenspeichersystem mit hoher Sicherheit, bei dem die Speicherung der Daten auf einem Server in einem Telekommunikationsnetz erfolgt und die lokalen Rechner der Nutzer über das Telekommunikationsnetz mit dem Server verbunden sind, **dadurch gekennzeichnet,**
- **dass** der Betreiber des Servers dem Nutzer auf Antrag ein Nutzerzertifikat für die Zugangsbedingungen ausstellt, das dem Nutzer in Verbindung mit einem öffentlichen und einem geheimen Schlüssel bereitgestellt wird,
- **dass** der über das Internet angewählte Server ein Clientprogramm zum lokalen Rechner des Nutzers sendet, das für den Nutzer die Authentifizierung sowie die Übertragung weiterer Sicherheitsanforderungen möglich macht,
- **dass** auf dem Server für angemeldete Nutzer ein persönlicher Hauptordner eingerichtet wird, der eine spezielle Datei mit den für diesen Hauptordner festgelegten Sicherheitsanforderungen und Verwaltungsangaben erhält und durch diese spezielle Datei den Status eines Hauptschließfaches (1) erhält,
- **dass** in den Hauptordnern weitere Ordner eingerichtet werden können, die nach Funktionen unterschieden werden und ebenfalls eine Datei mit den für sie jeweils festgelegten Sicherheitsanforderungen und Verwaltungsangaben enthalten und als funktionale Schließfächer fungieren,
- **dass** die in den Hauptordnern eingerichteten Schließfächer mindestens die folgenden Funktionen haben
- persönliche Schließfächer (2), in die ausschließlich der Nutzer des Hauptschließfaches seine Dateien speichern kann und die auch nur diesem Nutzer angezeigt werden,
- Bereitstellungsschließfächer (3), in die der Nutzer die Verweise für Dateien in nach Namen unterschiedenen Nutzerschließfächern für andere Anwender ablegt,
- Empfangsschließfächer (4), in denen dem Nutzer die mit Namen gekennzeichneten Schließfächer der Absender von Dateien angezeigt werden und beim Öffnen derartiger Schließfächer für den Nutzer ein Verweis zur Ablage der Dateien und zu den festgelegten Sicherheitsanforderungen sichtbar werden, und
- öffentliche Schließfächer (5), in denen vom Nutzer die Verweise auf Dateien gespeichert werden, die bei der Ablage im Bereitstellungsschließfach für mehrere Empfänger vorgesehen sind, und
- **dass** die Anzeige der Schließfächer nur erfolgt, wenn die sicherheitsrelevanten Vorgaben des Betreibers, Nutzers bzw. Anbieters erfüllt werden, so dass das Schließfachsystem virtuellen Charakter besitzt.

2. Verfahren nach Anspruch 1, **dadurch gekennzeichnet, dass** das Nutzerzertifikat mit dem öffentlichen und dem geheimen Schlüssel dem Nutzer auf einer Chipkarte bereitgestellt wird.

3. Verfahren nach Anspruch 1 oder 2, **dadurch gekennzeichnet, dass** das von dem Server zum lokalen Rechner des Nutzers übertragene Clientprogramm dem Nutzer die Übertragung von weiteren Sicherheitsanforderungen ermöglicht, die biometrische Systeme, geografische Positionsbestimmung mit Zeitabhängigkeiten sowie separate Zeiteinschränkungen und Netz- und Rechnerdaten enthalten.

4. Verfahren nach einem der Ansprüche 1 bis 3, **dadurch gekennzeichnet, dass** die hohe Sicherheit für die Speicherung und den Transfer von Dateien im Schließfachsystem **dadurch** erreicht wird,
- dass eine Speicherung von Dateien nur möglich ist, wenn die für das jeweilige Schließfach festgelegten Sicherheits- und Verwaltungsanforderungen erfüllt sind,
- dass aus den Daten der zu speichernden Datei zunächst eine Zufallszahl erzeugt wird, die den so genannten Zugangsschlüssel bildet, mit dem die Daten verschlüsselt werden,
- dass der Zugangsschlüssel anschließend mit dem öffentlichen Schlüssel des Nutzers verschlüsselt wird und danach der Zugangsschlüssel vernichtet wird, damit nur der Nutzer mit seinem geheimen Schlüssel den Zugangsschlüssel für den Zugang zu der gespeicherten Datei zurückgewinnen kann,
- dass die verschlüsselten Daten und die Verwaltungsangaben der zu speichernden Datei sowie der verschlüsselte Zugangsschlüssel der Datei zum Server übertragen werden, wo die verschlüsselten Daten ein zweites Mal verschlüsselt werden und ein für die Datei systemweit einmaliger Dateiidentifikator erzeugt wird, unter dem die Datei im Systemschließfach (6) abgelegt wird,
- dass in dem vom Nutzer gewählten funktionalen Schließfach nicht die Datei selbst, sondern ein Verweis auf die Datei abgelegt wird, der den Dateiidentifikator, den verschlüsselten Zugangsschlüssel sowie die Verwaltungsangaben zu der Datei enthält, und
- dass die gespeicherte Datei vom Eigentümer an einen anderen Nutzer nur weitergegeben werden kann, wenn der Eigentümer den verschlüsselten Zugangsschlüssel der Datei mit seinem geheimen Nutzerschlüssel entschlüsselt und mit dem öffentlichen Schlüssel des gewählten Empfängers wieder verschlüsselt und dieser verschlüsselte Zugangsschlüssel zusammen mit dem Dateiidentifikator und den Verwaltungsangaben zur der Datei als Verweis auf die Datei in das für den Empfänger eingerichteten Nutzerschließfach (7) abgelegt werden.

## Claims

1. Method for a high-security network-based data storage system, in which the data are stored on a server in a telecommunication network and the users' local computers are connected to the server by means of the telecommunication network,
**characterized in that**
- the server operator issues the user with a user certificate for the access conditions on request, the user being provided with said certificate in conjunction with a public and a secret key,
- the server selected using the Internet sends a client program to the user's local computer, which client program makes it possible for the user to authenticate and transmit further security requirements,
- a personal main folder is set up on the server for registered users, which folder receives a special file containing the security requirements and administration details established for this main folder and receives the status of a main locker (1) from this special file,
- further folders which are distinguished on the basis of functions, likewise contain a file containing the security requirements and administration details respectively established for them and act as functional lockers can be set up in the main folders,
- the lockers set up in the main folders have at least the following functions
- personal lockers (2) in which only the user of the main locker can store his files and which are also only displayed to this user,
- preparation lockers (3) in which the user stores the references for files in user lockers for other users, which user lockers differ by name,
- receiving lockers (4) in which those lockers belonging to the file senders which are labelled by name are displayed to the user, and a reference for storing the files and for the established security requirements is made visible to the user when such lockers are opened, and
- public lockers (5) in which the user stores the references to files which, when stored in the preparation locker, are intended for a plurality of recipients, and
- the lockers are displayed only when the security-relevant stipulations of the operator, user or provider are met, with the result that the locker system has a virtual character.

2. Method according to Claim 1, **characterized in that** the user is provided with the user certificate with the public and secret keys on a chip card.

3. Method according to Claim 1 or 2, **characterized in that** the client program transmitted from the server to the user's local computer makes it possible for the user to transmit further security requirements containing biometric systems, geographical position determination with time dependencies and separate time constraints and network and computer data.

4. Method according to one of Claims 1 to 3, **characterized in that** the high level of security for storing and transferring files in the locker system is achieved by virtue of the fact that
- files can be stored only if the security and administration requirements established for the respective locker have been met,
- a random number is first of all generated from the data in the file to be stored, said random number forming the so-called access key which is used to encrypt the data,
- the access key is then encrypted with the user's public key and the access key is then destroyed so that only the user can use his secret key to recover the access key for accessing the stored file,
- the encrypted data and the administration details of the file to be stored as well as the encrypted access key for the file are transmitted to the server where the encrypted data are encrypted a second time and a unique file identifier, under which the file is stored in the system locker (6), is generated for the file on a system-wide basis,
- the functional locker selected by the user does not store the file itself but rather a reference to the file, said reference containing the file identifier, the encrypted access key and the administration details for the file, and
- the owner can forward the stored file to another user only when the owner uses his secret user key to decrypt the encrypted access key for the file and encrypts it again using the public key of the selected recipient, and this encrypted access key is stored together with the file identifier and the administration details for the file, as a reference to the file, in the user locker (7) set up for the recipient.

## Revendications

1. Procédé pour un système de mémorisation des données, à haute sécurité basé sur un réseau, dans lequel la mémorisation des données s'effectue sur un serveur dans un réseau de télécommunication et les ordinateurs locaux des utilisateurs sont connectés au serveur par l'intermédiaire du réseau de télécommunication, **caractérisé en ce que**
- l'exploitant du serveur établit sur demande à l'utilisateur un certificat d'utilisateur pour les conditions d'accès, qui est mis à disposition de l'utilisateur en association avec une clé publique et une clé secrète,
- le serveur sélectionné via Internet émet un programme client vers l'ordinateur local de l'utilisateur, qui permet à l'utilisateur l'authentification, ainsi que le transfert d'exigences de sécurité supplémentaires,
- sur le serveur, il est installé pour des utilisateurs enregistrés un répertoire principal personnel, contenant un fichier spécial avec les exigences de sécurité et les indications administratives fixées pour ledit répertoire principal et qui par ce fichier spécial obtient le statut d'un casier principal (1),
- dans les répertoires principaux, il peut être installé des répertoires supplémentaires, qui se distinguent par leur fonction et qui contiennent également un fichier avec les exigences de sécurité et indications administratives fixées pour chacun d'eux et qui fonctionnent comme des casiers fonctionnels,
- les casiers installés dans les répertoires principaux ont au moins les fonctions suivantes :
- casiers personnels (2), dans lesquels exclusivement l'utilisateur du casier principal peut mémoriser ses données et qui ne sont affichés qu'à l'attention dudit utilisateur,
- casiers de mise à disposition (3), pour lesquels l'utilisateur sauvegarde des références pour des fichiers dans les casiers utilisateurs différenciés par noms, pour d'autres abonnés,
- casiers de réception (4), dans lesquels les casiers **caractérisés par** noms des expéditeurs de fichiers sont affichés à l'attention de l'utilisateur, et à l'ouverture de casiers de ce type, un renvoi pour la sauvegarde des fichiers et concernant les exigences de sécurité fixées devient visible pour l'utilisateur, et
- casiers publics (5), dans lesquels l'utilisateur peut mémoriser les renvois dans des fichiers, qui lors de la sauvegarde sont prévus dans le casier de mise à disposition pour plusieurs utilisateurs, et
- l'affichage des casiers ne s'effectue que si les prescriptions de l'exploitant, de l'utilisateur, respectivement fournisseur relevant de la sécurité sont satisfaites, de ce fait le système de casiers a un caractère virtuel.

2. Procédé selon la revendication 1, **caractérisé en ce que** le certificat utilisateur est mis à disposition de l'utilisateur avec la clé publique et la clé secrète sur une puce.

3. Procédé selon la revendication 1 ou 2, **caractérisé en ce que** le programme client transféré par le serveur vers l'ordinateur local de l'utilisateur permet le transfert d'exigences de sécurité supplémentaires, contenant des systèmes biométriques, des définitions de position géographique avec des asservissements au temps, ainsi que des restrictions temporelles séparées et des données concernant le réseau et l'ordinateur.

4. Procédé selon l'une quelconque des revendications 1 à 3, **caractérisé en ce que** la haute sécurité pour la mémorisation et le transfert de fichiers dans le systèmes de casiers est atteinte **en ce que**,
- une mémorisation de fichiers n'est possible que si les exigences de sécurité et exigences administratives fixées pour le casier concerné sont satisfaites,
- à partir des données du fichier à mémoriser, il est généré d'abord un chiffre aléatoire, formant la dénommée clé d'accès, avec laquelle les données sont cryptées,
- la clé d'accès est ensuite cryptée avec la clé publique de l'utilisateur, suite à quoi, la clé d'accès est détruite, pour qu'il soit possible seulement à l'utilisateur de récupérer avec sa clé secrète, la clé d'accès pour accéder au fichier mémorisé,
- les données cryptées et les indications administratives du fichier à mémoriser, ainsi que la clé d'accès cryptée du fichier sont transmises au serveur, dans lequel les données cryptées sont cryptées une deuxième fois et un identificateur de fichier unique pour ledit fichier dans l'ensemble du système est généré, sous lequel le fichier est sauvegardé dans le casier système (6),
- dans le casier fonctionnel choisi par l'utilisateur, ce n'est pas le fichier même, mais un renvoi vers le fichier qui est sauvegardé, qui contient l'identificateur du fichier, la clé d'accès cryptée, ainsi que les indications administratives concernant le fichier, et
- le fichier mémorisé ne peut être retransmis par le propriétaire à un autre utilisateur que si le propriétaire décrypte la clé d'accès cryptée du fichier avec sa clé secrète utilisateur et la recrypte avec la clé publique du destinataire choisi et si cette clé d'accès cryptée, avec l'identificateur de fichier et les indications administratives concernant le fichier sont sauvegardés en tant que renvoi vers le fichier dans le casier utilisateur (7) installé pour le destinataire.
